Europäisches Patentamt

(19) European Patent Office

Office européen des brevets

(11) Numéro de publication: **0 134 164**
**B1**

(12) **FASCICULE DE BREVET EUROPEEN**

(45) Date de publication du fascicule du brevet:
**07.01.88**

(21) Numéro de dépôt: **84401384.7**

(22) Date de dépôt: **29.06.84**

(51) Int. Cl.⁴: **B 25 B 21/00,** B 25 B 23/04,
B 23 P 19/06

(54) **Poignet de robot pour la distribution et l'embectage de vis.**

(30) Priorité: **22.07.83 FR 8312442**

(43) Date de publication de la demande:
**13.03.85 Bulletin 85/11**

(45) Mention de la délivrance du brevet:
**07.01.88 Bulletin 88/1**

(84) Etats contractants désignés:
**DE GB IT**

(56) Documents cités:
**US - A - 4 002 265**

(73) Titulaire: **AUTOMOBILES CITROEN, 62 Boulevard
Victor-Hugo, F-92200 Neuilly-sur-Seine (FR)**
Titulaire: **AUTOMOBILES PEUGEOT, 75, avenue de la
Grande Armée, F-75116 Paris (FR)**

(72) Inventeur: **Michaut, René Paul Michel, 110, rue des
Bussys, F-95600 Eaubonne (FR)**

(74) Mandataire: **Boivin, Claude, 9, rue Edouard-Charton,
F-78000 Versailles (FR)**

## Description

En général, un robot comporte un poignet destiné à exécuter une opération donnée et est capable de déplacer son poignet pour l'amener en un point de coordonnées définies auquel l'opération doit être effectuée.

Pour réaliser des assemblages par vissage, il est nécessaire dans une première opération d'embecter toutes les vis et d'engager dans les taraudages suffisamment de filets des vis pour les faire tenir; jusqu'à présent cet embectage était effectué manuellement. Dans une deuxième opération, une machine achève simultanément le vissage de toutes les vis selon un couple donné.

Le document US-A 4 002 265 décrit un dispositif de distribution de vis comprenant un bâti dans lequel une broche est montée à rotation, un axe claveté coulissant dans la broche et portant à son extrémité une tête propre à entrer en relation avec une tête de vis, des moyens pour entraîner la broche en rotation et des moyens pour déplacer longitudinalement l'axe dans la broche.

La présente invention a pour objet un dispositif qui forme poignet de robot et assure automatiquement l'embectage des vis, en comportant à cet effet une came pour déplacer longitudinalement dans la broche l'axe qui forme axe d'embectage, une pince qui est destinée à maintenir la vis à mettre en place et est mobile radialement par rapport à l'extrémité de l'axe d'embectage portant la tête, à partir d'une position dans laquelle la vis se trouve dans l'axe de la broche, et des moyens pour déplacer la pince.

Une vis étant engagée dans la pince et la broche étant entraînée en rotation alors que l'extrémité de l'axe d'embectage est écartée de la vis, le robot déplace le poignet de façon à amener la vis à l'aplomb du trou qui doit la recevoir. Le robot commande alors le déplacement longitudinal de l'axe d'embectage dont la tête vient s'engager sur la tête de la vis et pousse cette vis vers le trou en l'entraînant en rotation. La vis est ainsi embectée et partiellement vissée dans le trou. Le robot commande alors le déplacement de la pince qui se sépare de la vis.

La came peut être une came-tambour sur laquelle un doigt solidaire en translation de l'axe d'embectage est appuyé par des moyens élastiques.

Le poignet peut comporter une roue qui porte une série de pinces à sa périphérie et peut à la fois, pivoter par rapport au bâti et se déplacer radialement par rapport à la broche, et des moyens pour déplacer la roue et la faire pivoter. Après embectage d'une vis, le robot éloigne la roue de la broche et la fait pivoter d'un angle égal à l'écart angulaire entre deux pinces voisines de sorte qu'une nouvelle vis est prête à être embectée.

La roue porte-pinces peut être montée pivotante par rapport à un chariot qui est mobile radialement par rapport à la broche.

Dans un mode de réalisation de l'invention, les moyens pour entraîner la broche en rotation sont reliés par un embrayage à un arbre portant la came et à un arbre intermédiaire dont le pivotement assure à la fois le déplacement du chariot et le pivotement de la roue porte-pinces. Il suffit alors au robot de commander l'embrayage à chaque embectage de vis.

L'arbre intermédiaire peut, par exemple, entraîner un excentrique sur lequel est monté pivotant un pavé coulissant dans une rainure du chariot. Ce pavé est avantageusement logé avec un certain jeu dans sa rainure. Le retrait du chariot donc celui de la roue porte-pinces a lieu ainsi légèrement après l'embectage de la vis.

Les moyens pour faire pivoter la roue porte-pinces sont avantageusement commandés par le mouvement de va-et-vient du chariot. A cet effet, le poignet peut comporter une roue à cliquets qui est montée pivotante par rapport au chariot, qui est liée en rotation à la roue et coopère avec des cliquets portés respectivement par le bâti et par le chariot.

Le poignet peut comporter des contacteurs détectant l'arrivée de l'axe d'embectage en fin de course et le pivotement de l'arbre intermédiaire. Il est possible avec ces détecteurs de déceler l'absence de vis ou des filetages défectueux.

On a décrit ci-après, à titre d'exemple non limitatif, un mode de réalisation du poignet de robot selon l'invention, avec référence aux dessins annexés dans lesquels:

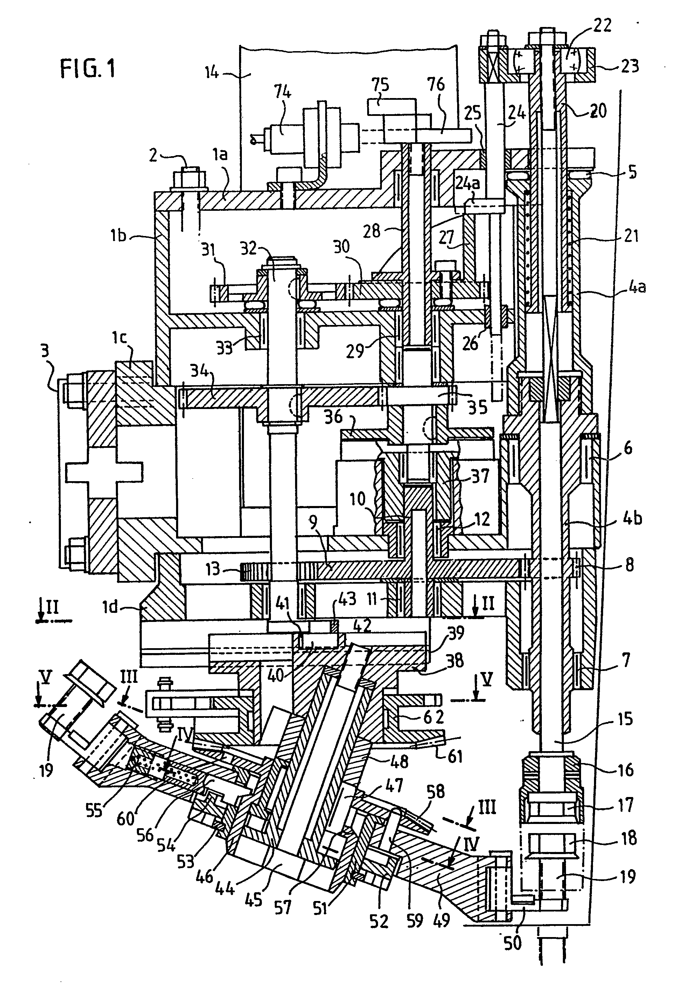

La Figure 1 est une vue en coupe du poignet;
La Figure 2 est une vue en coupe transversale suivant II-II de la Figure 1;
La Figure 3 est une vue en coupe transversale suivant III-III de la Figure 1;

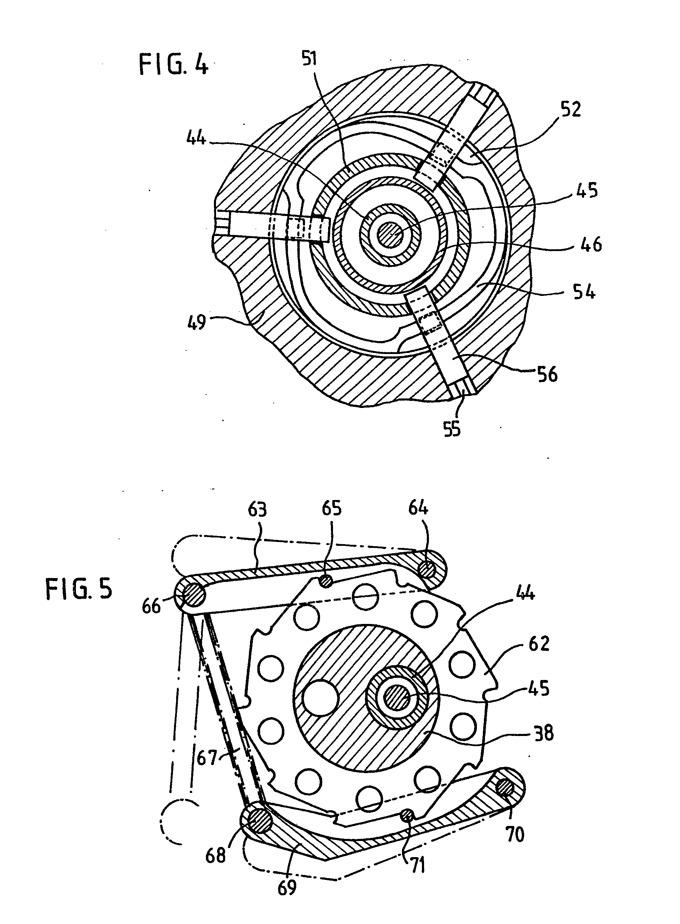

La Figure 4 est une vue en coupe transversale suivant IV-IV de la Figure 1 et montre les moyens de fixation de la roue porte-pinces;
La Figure 5 est une vue en coupe transversale suivant V-V de la Figure 1;
La Figure 6 est une vue de dessus du poignet.

Tel qu'il est représenté au dessin, le poignet de robot selon l'invention comprend un bâti qui est formé de quatre éléments 1a, 1b, 1c et 1d réunis par des boulons 2 et est fixé à un bras de robot 3.

Une broche formée de deux éléments 4a et 4b vissés l'un à l'autre, est montée à rotation dans le bâti par l'intermédiaire de roulements 5, 6 et 7. L'élément 4b de la broche est solidaire d'un pignon 8 qui est en prise avec un pignon 9 calé sur un arbre 10; celui-ci est monté à rotation dans des roulements 11 et 12 portés par les éléments 1c et 1d du bâti et le pignon 9 est par ailleurs en prise avec un pignon non visible au dessin et calé sur l'arbre de sortie d'un groupe moto-réducteur 14.

Dans la broche 4a–4b est claveté coulissant un axe 15 qui porte, à sa partie inférieure, une tête 16 munie d'un évidement 17 propre à contenir la tête 18 d'une vis 19. A sa partie supérieure, l'axe 15 est solidaire d'un manchon 20 qui peut coulisser dans la partie 4a de la broche. Un ressort 21 logé entre le manchon et la broche et prenant appui sur des épaulements de ces éléments tend à déplacer vers le bas le manchon et l'axe 15 qui en est solidaire.

Le manchon 20 est monté à rotation, par l'intermédiaire d'un roulement 22 dans un chapeau 23 qui est fixé sur une tige 24 montée coulissante verticalement dans des paliers 25 et 26 portés par le bâti.

La tige 24 présente un épaulement latéral 24a qui est maintenu en appui par le ressort 21 sur une came-tambour 27 solidaire d'un arbre 28. Celui-ci est monté à rotation dans le bâti par l'intermédiaire de roulements tels que 29 et porte un pignon 30 qui est ici solidaire de la came 27 et est en prise avec un pignon 31 calé sur un arbre auxiliaire 32. Cet arbre qui est monté à rotation dans le bâti par l'intermédiaire de roulements tels que 33 porte un pignon 34 qui est en prise avec un pignon 35 solidaire de l'élément mené 36 d'un embrayage électro-magnétique. L'élément menant 37 de cet embrayage est solidaire de l'arbre 10.

Dans ces conditions, quand l'embrayage électro-magnétique est excité, l'arbre auxiliaire 32 pivote et fait pivoter la came-tambour 27. Celle-ci libère la tige 24 qui se déplace vers le bas en entraînant le manchon 20 et l'axe 15. La tête 16 s'abaisse tout en continuant de tourner.

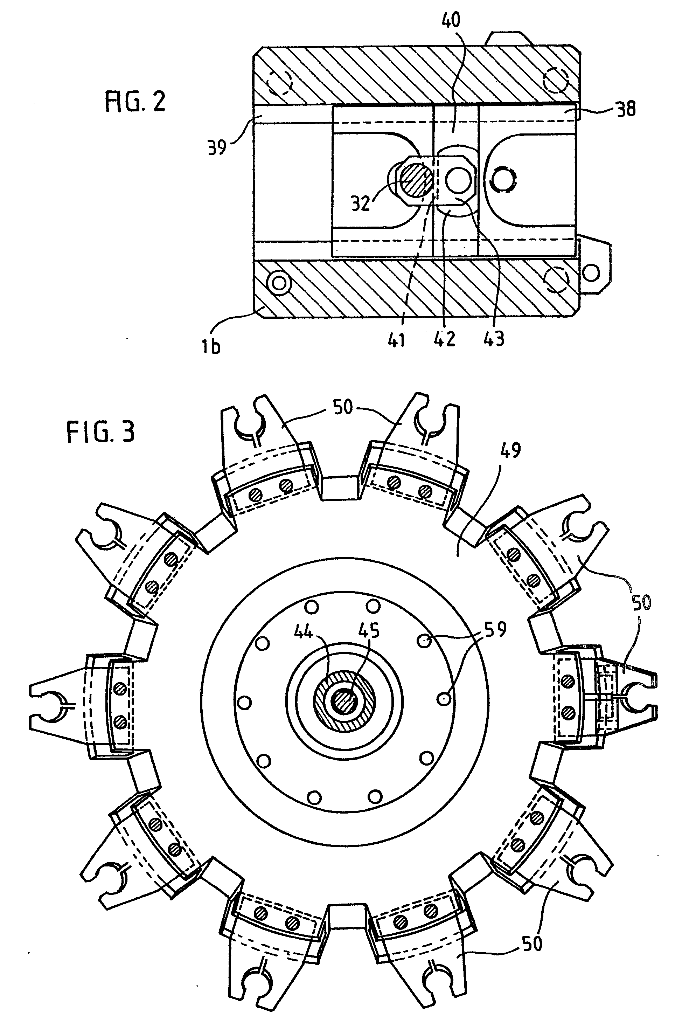

Un chariot 38 est monté coulissant sur des rails 39 portés par l'élément 1b du bâti et dirigés vers la broche 4a–4b en étant perpendiculaires à l'axe de cette broche. Ce chariot comporte une rainure 40 dont la direction est perpendiculaire à la fois aux rails 39 et à l'axe de la broche 4a–4b (voir Figure 2). Dans cette rainure est monté coulissant avec un jeu 41 un pavé 42 qui est articulé sur un excentrique 43 calé sur l'arbre intermédiaire 32. Quand cet arbre pivote d'un tour, le chariot 38 exécute ainsi un mouvement de va-et-vient qui successivement l'éloigne et le rapproche de la broche 4a–4b.

Un moyeu 44 est fixé au chariot 38 par une vis 45 s'étendant dans une direction oblique par rapport à l'axe de la broche 4a–4b. Un anneau 46 est monté libre en rotation sur le moyeu 44 par l'intermédiaire d'un roulement 47 qui prend appui sur une bague entretoise 48.

Une roue 49 qui porte à sa périphérie une série de pinces 50 propres chacune à recevoir une vis 19, est montée sur l'anneau 46 avec interposition d'une bague 51. Une roulette 52, montée pivotante dans la roue 49 autour de la bague 51 est maintenue par un circlips 53, porte sur sa surface intérieure des rails 54 propres à déplacer, contre l'action du ressort de rappel 55, des pênes 56 qui sont montés coulissants dans l'épaisseur de la roue 49 et peuvent s'engager sur un épaulement 57 de l'anneau 46.

L'anneau 46 est solidaire d'un pignon conique 58 contre lequel la bague 51 est en butée. La roue 49 porte une série de pions 59 qui sont disposés chacun en regard d'une pince 50 et peuvent s'engager dans des trous 60 des pignons 58, ce qui solidarise la roue 49 et le pignon 58 dans une position angulaire déterminée.

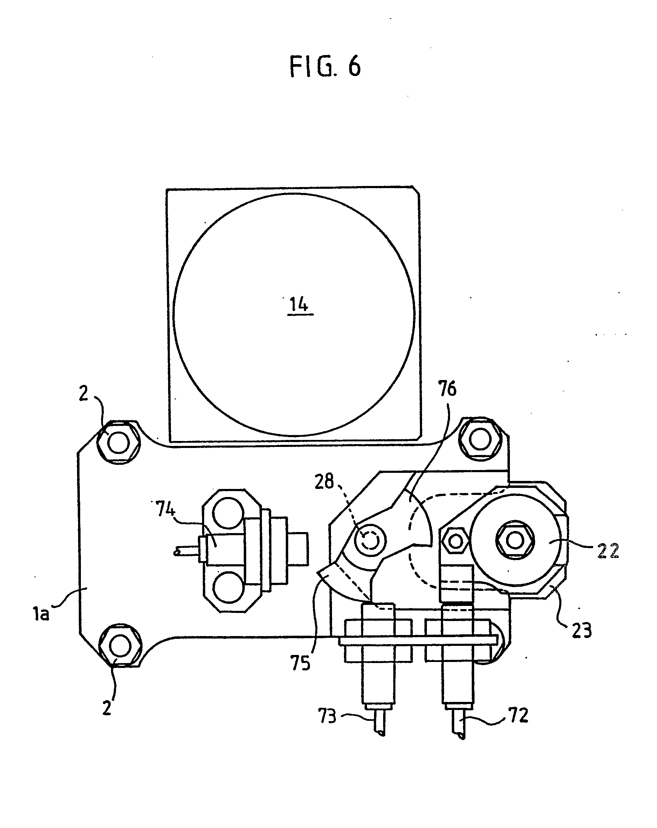

Le pignon 58 est en prise avec un pignon conique 61 qui fait corps avec une roue à rochets 62 montée pivotante sur le chariot 38 et présentant un nombre de rochets égal au nombre de pinces prévues à la périphérie de la roue 49. Un levier 63 monté pivotant en 64 sur l'élément 1d du bâti porte un cliquet 65 en prise avec la roue 62 (voir Figure 5). Le levier 63 est articulé en 66 sur l'une des extrémités d'un ressort 67 dont l'autre extrémité est montée pivotante en 68 sur un levier 69. Celui-ci est monté pivotant en 70 sur le chariot 38 et porte un cliquet 71 en prise avec la roue 62.

On voit ainsi que, lors d'un mouvement d'aller et retour du chariot 38, la roue à rochets 62 pivote d'une dent en entraînant le pignon 61. Le mouvement est transmis par les pignons 61 et 58 à la roue porte-pinces 49 qui pivote d'un angle égal à celui séparant deux pinces 50.

Il est prévu trois contacteurs de positions 72, 73 et 74 formant détecteurs. Le contacteur 72 est commandé par le chapeau 23 et est enclenché quand l'axe 15 atteint sa fin de course. Les contacteurs 73 et 74 sont commandés par deux cames 75 et 76 qui sont fixées sur l'arbre 28. La came 75 maintient le contacteur 73 enclenché au départ du cycle, moment auquel la came 76 n'agit pas sur le contacteur 74. Le contacteur 73 est normalement relâché avant l'enclenchement du contacteur 72. En cas d'absence de vis, l'axe 15 atteint sa position de butée plus rapidement et est enclenché avant la libération du contacteur 72, ce qui signale le défaut. Si le filetage de la vis est défectueux, le contacteur 74 est enclenché par la came 76 alors que le contacteur 72 ne l'est pas puisque l'axe 15 n'est pas en butée, ce qui signale ce défaut. Le poignet de robot qui vient d'être décrit fonctionne de la façon suivante.

Une roue 49 chargée de vis a préalablement été mise en place sur l'anneau 46 et le moteur 14 a été mis sous tension de sorte que la broche 4a–4b est entraînée en rotation; l'axe 15 est maintenu en position haute par la came-tambour 27 et une vis 19 se trouve dans l'axe de la tête 16. Le contacteur 73 est fermé.

Le robot déplace alors le poignet de façon que la vis 19 se trouvant dans l'axe de la tête 16 soit amenée à l'aplomb du trou qui doit la recevoir. Cette position atteinte, il envoie le signal de départ du cycle, ce qui appelle l'embrayage 36–37. L'arbre auxiliaire 28 se met à tourner et l'axe 15 descend, ce qui assure l'embectage de la vis 16 et le début de son vissage. Quand l'axe 15 atteint sa butée inférieure, la rotation se poursuit et la vis échappe à la tête 16.

Par ailleurs, le chariot 38 s'éloigne de la broche, ce qui libère la vis 16; mais du fait du jeu 41, ce mouvement ne se produit qu'après l'embectage de la vis.

Le mouvement du chariot 38 fait pivoter la roue à rochets 62, donc la roue porte-pinces 49, de sorte qu'une nouvelle vis 16 vient en position d'embectage.

L'axe 15 ayant atteint sa butée inférieure, le contacteur 72 est fermé, ce qui commande le robot et assure le déplacement de celui-ci vers un nouveau trou devant recevoir une vis.

L'arbre 28 continuant de tourner, la came 27 libère progressivement l'axe 15 qui remonte sous l'action du ressort 21. En même temps, le chariot 38 revient à sa position initiale de sorte qu'une nouvelle vis 18 vient se placer en regard de la tête 16. A ce moment l'arbre 28 a effectué un tour complet. Le contacteur 73 est alors de nouveau actionné, ce qui assure le relâchement de l'embrayage 36–37 et l'arrêt de l'arbre 28. Le poignet de robot est ainsi prêt à un nouveau cycle de travail.

Comme il a été indiqué précédemment, en cas d'absence de vis dans la pince 50 se trouvant en regard de l'axe 15, le contacteur 73 est encore actionné lors de la fermeture du contacteur 72, ce qui signale ce défaut. Un mauvais vissage de la vis est signalé par la fermeture du contacteur 74 alors que le contacteur 72 ne l'est pas, ce qui arrête le cycle.

**Revendications**

1. Dispositif de distribution de vis comprenant un bâti dans lequel une broche (4a–4b) est montée à rotation, un axe claveté coulissant dans la broche et portant à son extrémité une tête (16) propre à entrer en relation avec une tête de vis (18), des moyens pour entraîner la broche (4a–4b) en rotation et des moyens pour déplacer longitudinalement l'axe dans la broche, caractérisé en ce que le dispositif constitue un poignet de robot pour l'embectage de vis et comporte une came (27) pour déplacer longitudinalement dans la broche l'axe qui forme axe d'embectage, une pince (50) qui est destinée à maintenir la vis (19) à mettre en place et est mobile radialement par rapport à l'extrémité de l'axe d'embectage (15) portant la tête, à partir d'une position dans laquelle la vis se trouve dans l'axe de la broche, et des moyens pour déplacer la pince (50).

2. Dispositif selon la revendication 1, caractérisé en ce que la came (27) est une came-tambour sur laquelle un doigt (24a) solidaire en translation de l'axe d'embectage (15) est appuyé par des moyens élastiques (21).

3. Dispositif selon la revendication 1 ou 2, caractérisé en ce qu'il comprend une roue (49) qui porte une série de pinces (50) à sa périphérie, et peut à la fois pivoter par rapport au bâti et se déplacer radialement par rapport à la broche, et des moyens pour déplacer la roue et la faire pivoter.

4. Dispositif selon la revendication 3, caractérisé en ce que l'axe de pivotement de la roue est oblique par rapport à l'axe de la broche.

5. Dispositif selon la revendication 3 ou 4, caractérisé en ce que la roue porte-pinces (49) est montée pivotante par rapport à un chariot (38) qui est mobile radialement par rapport à la broche (4a–4b).

6. Dispositif selon la revendication 5, caractérisé en ce que les moyens (14) pour entraîner la broche (4a–4b) en rotation sont reliés par un embrayage (36–37) à un arbre (28) portant la came (27) et à un arbre intermédiaire (32) dont le pivotement assure à la fois le déplacement du chariot (38) et le pivotement de la roue porte-pinces (49).

7. Dispositif selon la revendication 6, caractérisé en ce que l'arbre intermédiaire (32) entraîne un excentrique (43) sur lequel est monté pivotant un pavé (42) coulissant dans une rainure (40) du chariot (38).

8. Dispositif selon la revendication 7, caractérisé en ce que le pavé (42) est logé avec un certain jeu dans sa rainure (40).

9. Dispositif selon l'une des revendications 5 à 8, caractérisé en ce que les moyens pour faire pivoter la roue porte-pinces (49) sont commandés par le mouvement de va-et-vient du chariot (38).

10. Dispositif selon la revendication 9, caractérisé en ce qu'il comporte une roue à cliquets (62) qui est montée pivotante par rapport au chariot (38), qui est liée en rotation à la roue (49) et coopère avec des cliquets (65 et 71) portés respectivement par le bâti et par le chariot.

11. Dispositif selon l'une des revendications 6 à 10, caractérisé par des contacteurs (72, 73 et 74) détectant l'arrivée de l'axe d'embectage (15) en fin de course et le pivotement de l'arbre intermédiaire (32).

**Patentansprüche**

1. Vorrichtung zur Handhabung von Schrauben mit einem Gehäuse, in dem eine Spindel (4a–4b) drehbar gelagert ist, einer Achse, die verschiebbar in der Spindel verkeilt ist und an ihrem Ende einen Kopf (16) trägt, der zur Verbindung mit einem Schraubenkopf (18) geeignet ist, Mitteln zum Drehantrieb der Spindel (4a–4b) und Mitteln zur Verschiebung der Achse in der Spindel in Längsrichtung, dadurch gekennzeichnet, dass die Vorrichtung als Roboterhand zum anfänglichen Einschrauben von Schrauben ausgebildet ist und eine Kurvenführung (27) aufweist zur Verschiebung der eine Einschraubachse bildenden Achse in der Spindel, sowie eine Zange (50), die dazu bestimmt ist, die einzusetzende Schraube (19) festzuhalten und die in bezug auf das den Kopf tragende Ende der Einschraubachse (15), ausgehend von einer Position, in der die Schraube sich in der Spindelachse befindet, in radialer Richtung beweglich ist, und Mittel zur Verschiebung der Zange (50).

2. Vorrichtung nach Anspruch 1, dadurch gekennzeichnet, dass die Kurvenführung (27) eine Kurventrommel ist, auf der sich ein unter der Wirkung elastischer Mittel (21) stehender Finger (24a) abstützt, der in bezug auf Translation kraftschlüssig mit der Einschraubachse (15) verbunden ist.

2. Vorrichtung nach Anspruch 1, dadurch gekennzeichnet, dass die Kurvenführung (27) eine Kurventrommel ist, auf der sich ein unter der Wirkung elastischer Mittel (21) stehender Finger (24a) abstützt, der in bezug auf Translation kraftschlüssig mit der Einschraubachse (15) verbunden ist.

3. Vorrichtung nach Anspruch 1 oder 2, dadurch gekennzeichnet, dass sie ein Rad (49) aufweist, das an seiner Peripherie eine Gruppe von Zangen (50) trägt und gleichzeitig in bezug auf das Gehäuse sich verdrehen und in bezug auf die Spindel sich in radialer Richtung verschieben kann, und Mittel zur Verschiebung und zur Verdrehung des Rades.

4. Vorrichtung nach Anspruch 3, dadurch gekennzeichnet, dass die Drehachse des Rades schräg zur Spindelachse verläuft.

5. Vorrichtung nach Anspruch 3 oder 4, dadurch gekennzeichnet, dass das zangentragende Rad (49) drehbar in bezug auf einen Schlitten (38) angeordnet ist, der in bezug auf die Spindel (4a–4b) in radialer Richtung bewegbar ist.

6. Vorrichtung nach Anspruch 5, dadurch gekennzeichnet, dass die Mittel (14) zum Drehantrieb der Spindel (4a–4b) über eine Kupplung (36–37) mit einer die Kurvenführung (27) tragenden Welle (28) und mit einer Zwischenwelle (32) verbunden sind, deren Drehung gleichzeitig die Verschiebung des Schlittens (38) und die Drehung des zangentragenden Rades (49) bewirkt.

7. Vorrichtung nach Anspruch 6, dadurch gekennzeichnet, dass die Zwischenwelle (32) einen Exzenter (43) antreibt, an dem drehbar ein Kulissenstein (42) angeordnet ist, der in einer am Schlitten (38) angeordneten Nut (40) gleitet.

8. Vorrichtung nach Anspruch 7, dadurch gekennzeichnet, dass der Kulissenstein (42) mit einem gewissen Spiel in seiner Nut (40) angeordnet ist.

9. Vorrichtung nach einem der Ansprüche 5 bis 8, dadurch gekennzeichnet, dass die Mittel zum Verdrehen des zangentragenden Rades (49) von der Hin- und Herbewegung des Schlittens (38) gesteuert werden.

10. Vorrichtung nach Anspruch 9, dadurch gekennzeichnet, dass sie ein Sperrklinkenrad (62) aufweist, das drehbar in bezug auf den Schlitten (38) angeordnet ist und das mit dem Rad (49) in Drehverbindung steht und mit Sperrklinken (65 und 71) zusammenwirkt, die jeweils am Gehäuse und am Schlitten angeordnet sind.

11. Vorrichtung nach einem der Ansprüche 6 bis 10, gekennzeichnet durch Kontaktgeber (72, 73 und 74), welche die Ankunft der Einschraubachse (15) am Ende ihres Laufweges und die Verdrehung der Zwischenwelle (32) anzeigen.

## Claims

1. Screw distribution device comprising a frame in which a spindle (4a–4b) is rotary mounted, a wedge-fastened pin sliding inside the spindle and bearing at its extremity a head (16) suitable for communicating with a screw head (18), means to rotary drive the spindle (4a–4b) and means to logitudinally move the pin inside the spindle, characterized in that the device consists of a robot wrist to introduce screws and includes a cam (27) to longitudinally move inside the spindle the pin which forms an introduction pin, a clip (50) designed to keep the screw (19) in position and which is radially mobile in relation to the extremity of the introduction pin (15) bearing the head from a position in which the screw occurs inside the pin of the spindle, and means to move the clip (50).

2. Device according to claim 1, characterized in that the cam (27) is a barrel cam on which a translation interdependent finger (24a) of the introduction pin (15) is supported by elastic means (21).

3. Device according to claim 1 or 2, characterized in that it includes a wheel (49) which bears a series a clips (50) at its periphery and can both pivot in relation to the frame and move radially in relation to the spindle, and means to move the wheel and cause it to pivot.

4. Device according to claim 3, characterized in that the pivoting pin of the wheel is oblique in relation to the pin of the spindle.

5. Device according to claim 3 or 4, characterized in that the clip-holder wheel (49) is mounted and pivots in relation to a carriage (38) which is radially mobile in relation to the spindle (4a–4b).

6. Device according to claim 5, characterized in that the means (14) to drive the spindle (4a–4b) in rotation are connected by a clutch (36–37) to a shaft (28) bearing the cam (27) and to an intermediate shaft (32), the pivoting of which ensures both the movement of the carriage (38) and the pivoting of the clip-holder wheel (49).

7. Device according to claim 6, characterized in that the intermediate shaft (32) drives an eccentric or cam (43) on which is mounted and pivots a block (42) sliding into a groove (40) of the carriage (38).

8. Device according to claim 7, characterized in that the block (42) is housed, with a certain amount of clearance, inside its groove (40).

9. Device according to one of claims 5 to 8, characterized in that the means to cause the clip-holder wheel (49) to pivot are controlled by the to-and-fro movement of the carriage (38).

10. Device according to claim 9, characterized in that it includes a ratchet wheel (62) which is mounted and pivots in relation to the carriage (38) which is linked in rotation to the wheel (49) and cooperates with the ratchets (65 and 71) borne respectively by the frame and carriage.

11. Device according to one of claims 6 to 10, characterized by contactors (72, 73 and 74) detecting the arrival of the introduction pin (15) at the limit of travel and the pivoting of the intermediate shaft (32).

**FIG. 1**

FIG. 2

FIG. 3

FIG. 4

FIG. 5

# FIG. 6